# EUROPEAN PATENT SPECIFICATION

(11) **EP 2 184 500 B1**
(45) Date of publication and mention of the grant of the patent: **09.01.2013**
(21) Application number: 09010315.1
(22) Date of filing: 11.08.2009
(51) Int. Cl.: F16B 37/08

(54) **Connecting element, mould for producing a connecting element by injection moulding and method of demoulding a connecting element**
Verbindungselement, Form zur Herstellung eines Verbindungselements durch Spritzguss und Verfahren zur Entformung eines Verbindungselements
Élément de connexion, moule de production d'un élément de connexion par moulage à injection et procédé de démoulage d'un élément de connexion

(30) Priority: 06.11.2008 DE 102008057221
(43) Date of publication of application: 12.05.2010
(73) Proprietor: Newfrey LLC, Newark, Delaware 19711 (US)
(72) Inventor: Schäty, Harald, 35394 Giessen (DE); Stigler, Mario, 35394 Giessen (DE); Seng, Hans-Peter, 35394 Giessen (DE); Gerlach, Wolfgang, 35394 Giessen (DE)
(74) Representative: Steil, Christian

(56) References cited:
- JP-A- 2000 028 042
- US-A1- 2004 163 218

## Description

The present invention relates to a connecting element for fitting onto an elongated fastening element, in particular a pin, bolt or the like, comprising a receiving portion for receiving the fastening element in an axial direction of insertion, at least one guiding portion, which is provided on at least one respective guiding element formed on the receiving portion in order to support the fastening element laterally, a latching element, which is formed on the receiving portion, the latching element having a functional portion on which the fastening element slides in the direction of insertion and which inhibits movement of the fastening element in a direction opposite to the direction of insertion.

The present invention also relates to a mould for producing a connecting element by injection moulding.

The present invention also relates to a method of demoulding a connecting element, comprising a receiving portion for receiving a fastening element in an axial direction of insertion, a guiding portion, which is formed on a guiding element of the receiving portion in order to support the fastening element laterally, and a latching element, which is formed on the receiving portion.

Connecting elements of this type serve for fastening pins or bolts, in particular threaded bolts, or else for fixing items on a fixed pin or bolt. They are used in particular for fastening plastic parts in automobile construction.

The connecting elements usually have an opening, into which the bolt to be fixed is inserted. Arranged inside the opening are retaining fingers, which allow the bolt to be inserted into the opening and become wedged with the bolt when it is withdrawn, and consequently prevent or hinder withdrawal. Connecting elements of this type are preferably produced from plastic in an injection moulding process.

JP 2000-28042 discloses a holding element for fastening a bolt, comprising an opening into which the bolt can be inserted, the bolt being laterally supported in the opening by radially protruding holding portions and a plurality of retaining fingers being arranged in the opening. The retaining fingers are formed in such a way that they are pivoted radially outwards when the bolt is inserted and become wedged with the bolt when it is withdrawn, and prevent or hinder this movement. The bolt has a thread or circumferential grooves, in which the retaining fingers engage and form a positive connection.

In the case of connecting elements of this type, it is disadvantageous that the holding portions and retaining fingers arranged in the opening are arranged one behind the other in the direction of insertion, and in production consequently either have to be assembled from different individual parts or else produced with complicated moulds by the injection moulding process. In the case of production by the injection moulding process, the step of demoulding elements lying inside the moulds is particularly laborious. The moulds for injection-moulded elements of this type usually comprise a large number of moulds, which have to be moved in different axial and radial directions during demoulding. Such production processes are laborious and require complicated moulds, which have a low service life as a result of the different directions of movement.

From US 2004/0163218 A1 a spacer for attaching a dash silencer is known, comprising a cylindrical hollow body, a first flange extending radially outward from one of the ends of the body, a second flange extending radially outward from the other end of the body, a plurality of engagement pawls each extending from the outer surface of the other end of the body toward the first flange. The engagement pawls include a resilient engagement pawl and a rigid engagement pawl. The contact flange has an outer diameter slightly larger than the hole diameter of a mounting hole formed in the dash silencer to allow the spacer to be readily inserted into the mounting hole. Each of the engagement pawls has an outer shape expanding upwards outward to allow the spacer to be inserted into the mounting hole while aligning the respective centers of the spacer the mounting hole with one another. The resilient engagement pawl is adapted to engage with the lower surface of a rubber sheet of the dash silencer after the insertion operation of the spacer, so as to fasten the spacer to the dash silencer.

The invention is therefore based on the idea of providing a connecting element which can be produced with little effort and nevertheless has all the functional features of conventional connecting elements.

The invention is also based on the object of providing a mould and a method for producing a connecting element by the injection moulding process with little effort.

This object is achieved in the case of the connecting element mentioned at the beginning by the latching element having at least one clearance, wherein the at least one guiding element (22) is formed in line with the at least one clearance in the axial direction in such a way that a mould element can be made to pass through the clearance.

The above object is also achieved by a mould comprising a first mould element and a second mould element, which define an injection moulding cavity, the first mould element and the second mould element being formed in such a way that, during demoulding, the first mould element can be released from the connecting element in the direction of insertion and the second mould element can be released from the connecting element counter to the direction of insertion.

Finally, the above object is achieved by a method mentioned at the beginning, two mould elements being brought together in order to define an injection moulding cavity, a first of the mould elements defining a side face and the guiding portion of the guiding element, a second of the mould elements defining a sliding portion of the latching element and an end face of the guiding element facing the latching element, the injection moulding cavity being filled, and the mould elements being drawn back in opposite directions, whereby a continuous clearance remains in the latching element on account of the drawing back of the first mould element.

Hence, the guiding element can be formed at least partially through the clearance in an injection moulding process.

The above object is consequently completely achieved.

In a preferred embodiment, the latching element is formed adjacent to the guiding portion in the axial direction.

This allows a number of guiding portions to be arranged next to one another in the receiving portion, whereby the acceptance of transverse forces of the bolt can be improved.

In a preferred embodiment, the latching element protrudes radially with respect to the guiding element.

This allows a great radial force to be exerted on the bolt by the latching elements, whereby a holding force with which the bolt is held in the receiving portion is increased.

It is also preferred that the latching element is formed in a radially pivotable manner.

This facilitates insertion of the bolt into the receiving portion.

It is also preferred if the functional portion forms a non-positive connection with the fastening element in the direction opposite to the direction of insertion.

This allows bolts formed in virtually any way desired with a smooth surface to be held in the connecting element.

Alternatively, it is preferred if the functional portion forms a positive connection with the fastening element in the direction opposite to the direction of insertion.

This allows fastening elements with a ribbed or helical outer profile to be fixed particularly firmly in the receiving portion.

The functional portion preferably has a sliding portion and a latching portion.

This allows the functional portion to form both a non-positive connection and a positive connection with the fastening element.

It is also preferred if the sliding portion is formed orthogonally in relation to the latching portion.

This allows the holding properties of the latching elements to be further improved.

It is also preferred if the guiding element and the latching element are formed in one piece.

This allows the connecting element generally to be produced at particularly low cost.

It is also preferred if a plurality of guiding elements and a plurality of latching elements are formed on the receiving portion.

This allows both the coaxial guidance of the fastening element in the receiving portion and the holding force of the latching elements to be increased.

In a preferred embodiment of the mould, the first mould element defines a side face and the guiding portion of the guiding element and the second mould element defines the clearance and an end face of the guiding element facing the latching element.

This makes it possible to dispense with additional demoulding tools or pivoting movements during demoulding.

It is also preferred in the case of the mould if the first mould element defines a portion of the latching element facing the guiding element.

This allows the latching element to be completely defined by two mould elements and demoulded in opposite movements of the mould elements.

In the case of the method, it is particularly preferred if a side face and a guiding portion of a guiding element are defined by a first one of the mould elements.

This allows the first mould element to be easily moved in a direction parallel to the guiding portion in a demoulding step.

It is also preferred if an end face of the guiding element facing a latching element is defined by a second one of the mould elements through a clearance in the latching element.

This allows the guiding element to be completely defined and the second of the mould elements to be moved parallel to the guiding portion.

It is also preferred if a portion of the latching element facing the guiding element is defined by the first mould element.

This allows the first mould element to be moved parallel to the guiding portion in a demoulding step, and so demoulding to be easily performed.

It goes without saying that the features mentioned above and those still to be explained below can be used not only in the combination respectively specified but also in other combinations or on their own without departing from the scope of the present claims.

Exemplary embodiments of the invention are explained in more detail in the description which follows and are represented in the drawing, in which:
- Fig. 1: shows a schematic view of a connecting element according to the invention in the axial direction of insertion;
- Fig. 2: shows a schematic view of the connecting element in section along a line A-A from Fig. 1;
- Fig. 3: shows a schematic view of the connecting element in section along a line B-B from Fig. 1;
- Fig. 4: shows a schematic view of a connecting element in section along the line A-A from Fig. 1 with a received fastening element;
- Fig. 5: shows a schematic sectional view of a mould for producing a connecting element according to the invention;
- Fig. 6: shows a schematic sectional view of the mould for producing the connecting element according to the invention.

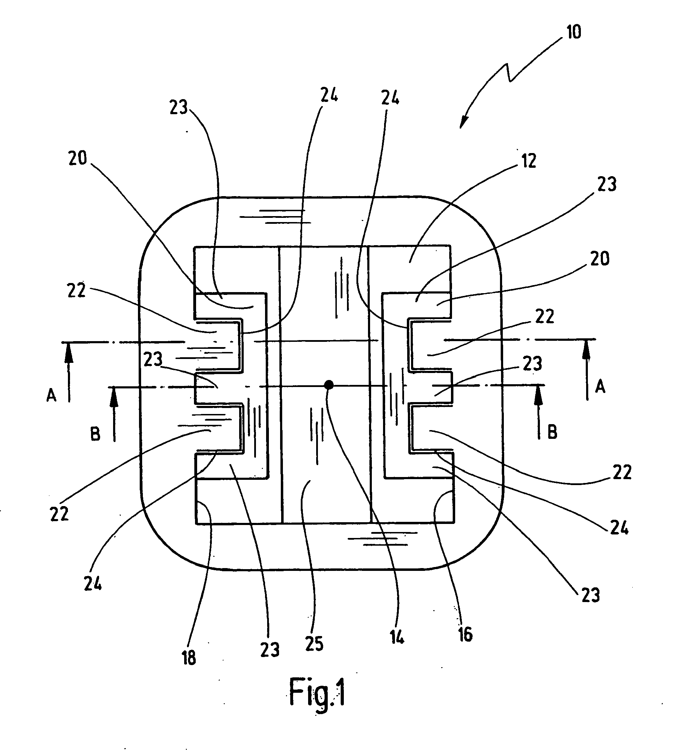

In Fig. 1, a connecting element is designated generally by 10.

The connecting element 10 has a receiving portion 12, which is formed as an elongated clearance in the connecting element 10. In the case of the connecting element 10 represented in Fig. 1, the receiving portion 12 has a square base area. The receiving portion 12 is formed in an elongated manner along an axis 14. A latching element 20 is respectively arranged on two opposite inner surfaces 16, 18 of the receiving portion 12. Two guiding elements 22 are respectively arranged on the inner surfaces 16, 18. The latching elements 20 respectively have three webs 23 and two clearances 24. The clearances 24 are formed between the webs 23 and extend parallel to the axis 14. The guiding elements 22 have an elongated form in the direction of the axis 14. Seen in the direction of the axis 14, the guiding elements 22 have a rectangular base area and are arranged in line with the clearances 24 in the direction of the axis 14. A stop 25 is also formed in the receiving portion. Represented in Fig. 1 is a first line A-A, which marks a section through two of the guiding elements 22. Also represented in Fig. 1 is a line B-B, which marks a section through the latching elements 20.

The connecting element 10 has the receiving portion 12, in which an elongated fastening element or a pin, bolt or the like (not represented) can be received. The connecting element has the guiding elements 22, which laterally support the fastening element, and also has the latching elements 20, which allow the fastening element to slide when it is inserted into the receiving portion 12 and inhibit movement in the opposite direction. The guiding elements 22 serve in this case as lateral tolerance compensation. The latching elements 20 have the clearances 24, with which the guiding elements 22 are in line in the direction of the axis 14, in order to permit simple demoulding from moulds in the production of the connecting element 10 by the injection moulding process. The operating principle of the connecting element 10 and of the moulds is explained in more detail below.

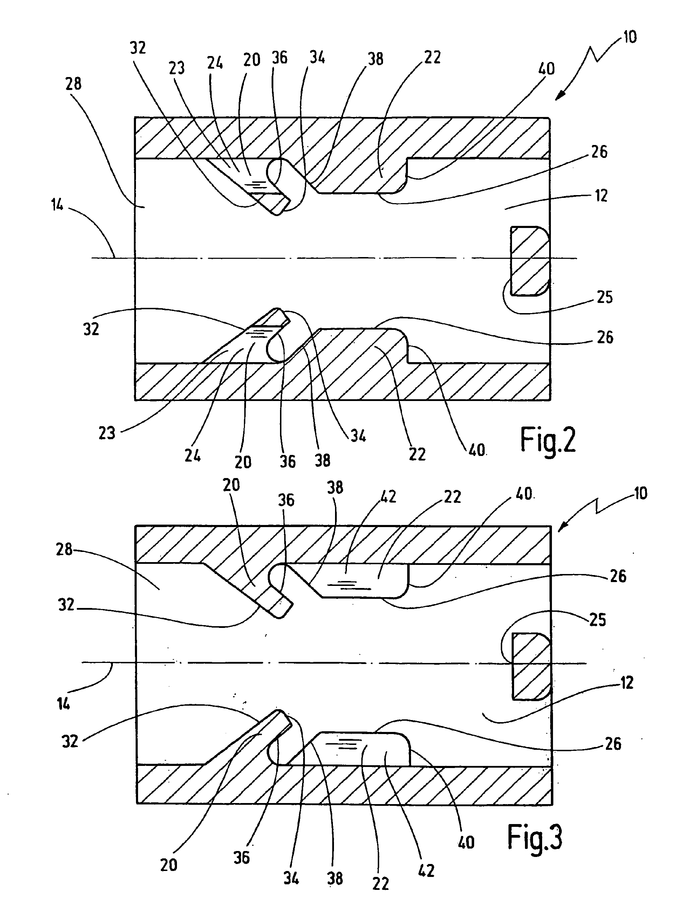

In Fig. 2, the connecting element 10 is schematically represented in a sectional view in section along the line A-A from Fig. 1. Hatched areas indicate elements of the connecting element 10 that are shown in section.

In each case one of the guiding elements 22 and one of the latching elements 20 are arranged on the inner surfaces 16, 18 on opposite sides of the axis 14. The guiding elements 22 in each case have a guiding portion 26 or a guiding surface 26, which is formed parallel to the axis 14. Since the section along the line A-A runs through the clearances 24, the webs 23 in the region of the clearances 24 are represented as non-hatched areas. The guiding elements 22 are in line with the clearances 24 in the direction of the axis 14. The connecting element 10 has an insertion opening 28 at one axial end and the stop 25 at an opposite axial end.

The latching elements 20 have in each case a sliding portion 32 and a latching portion 34. The sliding portion 32 is formed obliquely in relation to the axis 14 and facing the insertion opening 28. The latching portion 34 is formed perpendicularly in relation to the sliding portion 32 and facing the stop 25. The latching elements 20 also have in each case a rear portion 36, which is facing the respective guiding element 22.

The guiding elements 22 have in each case a front portion 38, which is facing the respective latching element 20, and in each case a rear portion 40, which is facing the stop 25.

The insertion opening 28 serves for the insertion of a fastening element (not represented) into the receiving portion 12. The fastening element is inserted into the receiving portion in the direction of the axis 14. During the insertion of the fastening element, the fastening element slides on the guiding portions 26 and the sliding portions 32. For this purpose, the latching elements 20 pivot radially outwards. The stop 25 serves the purpose of limiting the degree of insertion of the fastening element. In the case of a movement of the fastening element counter to the direction of insertion, the sliding portions 32 and/or latching portions 34 inhibit the movement of the fastening element in the direction of the insertion opening 28.

The arrangement of the guiding elements 22 in line with the clearances 24 makes it possible with a mould to form the front portion 38 of the guiding element 22 through the clearance 24 and to move the mould parallel to the axis 14, in the direction of the insertion opening 28, during demoulding.

In Fig. 3, the connecting element 10 is schematically represented in a sectional view in section along the line B-B in Fig. 1. Hatched areas represent elements of the connecting element 10 that are shown in section.

In this sectional view, the webs 23 of the latching elements 20 are shown in section and, as a result, the clearances 24 cannot be seen. The guiding elements 22 are represented non-hatched, since in this sectional representation they do not represent an element that is shown in section. In this representation, a side face 42 of the guiding elements 22 is respectively visible.

The offset arrangement of the webs 23 of the latching elements 20 with respect to the guiding elements 22 makes it possible with a mould to form the rear portion 36 of the latching elements 20 in the region of the webs 23 and to move the mould parallel to the axis 14, in the direction of the stop 25, during demoulding.

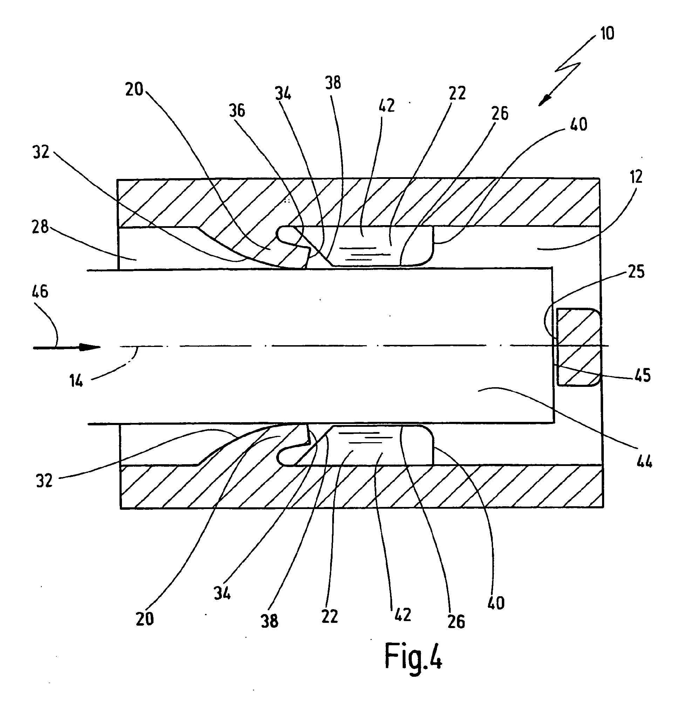

In Fig. 4, the connecting element 10 is schematically represented in a sectional representation in section along the line B-B with an inserted fastening element 44.

The fastening element 44 is arranged coaxially in relation to the axis 14 in the receiving portion 12 of the connecting element 10. The fastening element 44 lies laterally against the guiding portions 26 of the guiding elements 22. Furthermore, the fastening element 44 lies laterally against the sliding portions 32 of the latching elements 20. The fastening element 44 lies with an axial end 45 against the stop 25 of the connecting element 10.

The fact that the fastening element 44 lies against the guiding portions 26 of the guiding elements 22 means that the fastening element 44 is laterally guided and kept in a coaxial position in relation to the axis 14. The insertion of the fastening element 44 into the receiving portion 12 in the direction of insertion, which is indicated by an arrow 46, has the effect that the latching elements 20, which protrude radially inwards with respect to the guiding portions 26, are pressed radially outwards, so that the sliding portions 32 lie laterally against the fastening element 44. In this position of the latching elements 20, the latching portions 34, which are formed orthogonally in relation to the sliding portions 32, are arranged orthogonally in relation to the side faces of the fastening element 44. Movement of the fastening element 44 counter to the direction of insertion is inhibited by the latching elements 20. In this case, the sliding portions 32 and/or the latching portions 34 form a non-positive connection with the fastening element 44. The latching elements 20 are elastically formed, so that the sliding portions 32 are pressed against the fastening element 44 with a pressing force in a radial direction. If the fastening element 44 is moved counter to the direction of insertion, this pressing force is intensified as a result of the oblique arrangement of the latching elements 20. Consequently, in the case of a movement of the fastening element 44 counter to the direction of insertion, the latching elements 20 have a self-inhibiting effect. The stop 25, against which the axial end of the fastening element 44 lies, limits the insertion of the fastening element 44 into the receiving portion 12.

Equally, the connecting element 10 may also be fitted onto a threaded bolt or a screw with a ribbed outer profile. In this case, the sliding portions 32 form a non-positive connection with the outer profile and/or the latching portions 34 form a positive connection with the outer profile.

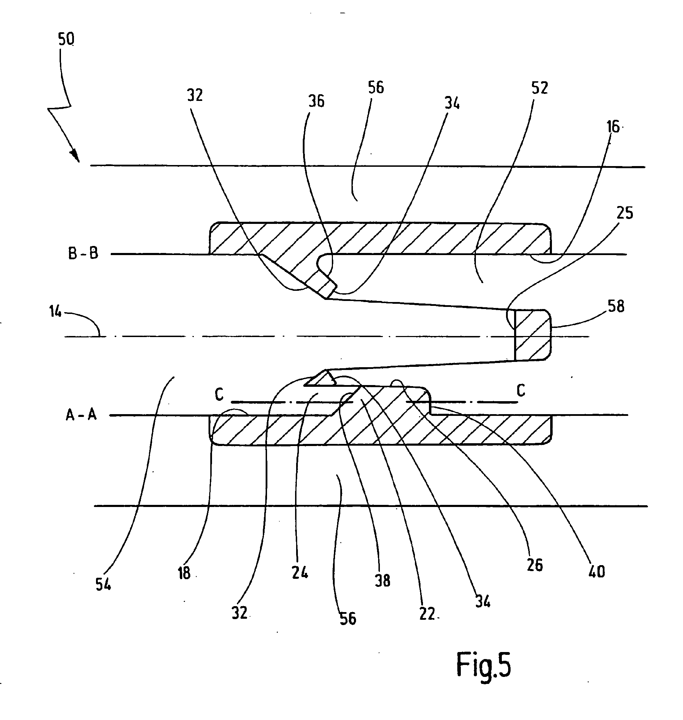

In Fig. 5, a sectional representation through an arrangement of moulds for producing the connecting element 10 is schematically represented. In this case, the region above the axis 14 corresponds to the section along the line B-B from Fig. 1 and accordingly the representation from Fig. 3, whereas the region below the axis 14 corresponds to a section along the line A-A from Fig. 1 and accordingly represents a sectional view according to Fig. 2. In this representation, hatched areas are parts of the connecting element 10 that are shown in section.

In Fig. 5, the mould is designated generally by 50. The mould 50 defines injection moulding cavities, which are filled with an injection moulding compound in order to form the connecting element 10 after the curing of the injection moulding compound.

The mould 50 is formed by a first mould element 52, a second mould element 54 and an outer mould element 56. The mould elements 52, 54 are arranged coaxially in relation to one another and define the inner surfaces 16, 18 of the receiving portion 12. The outer mould element 56 defines the outer form of the connecting element 10. The first mould element 52 defines the latching portion 34 and the rear portion 36 of the latching elements 20, as represented in the sectional view B-B. The first mould element 52 also defines a rear side 58 of the stop 25. The second mould element 54 defines the sliding portion 32 and the stop 25, as represented in the section B-B.

The first mould element 52 defines the latching portion 34, the guiding portion 26 and the rear portion 40 of the guiding element 22, as represented in the section A-A. The first mould element 52 also defines the rear side 58 of the stop 25. The section A-A shows that the second mould element 54 defines an upper part of the sliding portion 32, the clearance 24 and the front portion 38 of the guiding element 22.

The first mould element 52 and the second mould element 54 are made to match one another in such a way that they can be moved in opposite directions parallel to the axis 14 during demoulding, in order in this way to demould the connecting element 10. All surfaces and elements in the receiving portion 12 can be defined in this way and demoulded by simple coaxial movement of the mould elements 52, 54 in opposite directions. In particular, the front portion 38 of the guiding element 22 can be defined by the second mould element 54 through the clearance 24, as can be seen in the section A-A. Furthermore, the rear portions 36 can be defined by the first mould element 52 between the guiding elements 22.

Indicated in Fig. 5 is a line C-C, which defines a sectional position to be explained in more detail below.

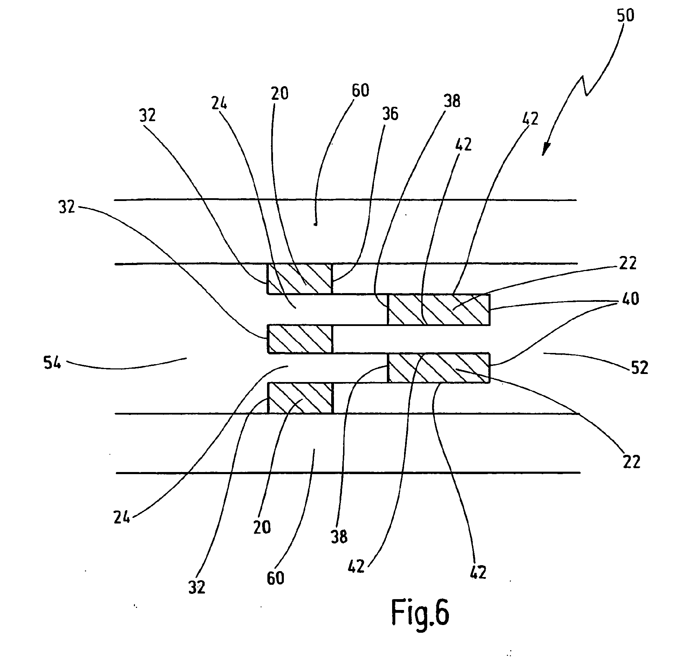

In Fig. 6, a sectional view in section along the line C-C from Fig. 5 is schematically represented. In this case, parts of the connecting element 10 that are shown in section are represented as hatched.

Fig. 6 shows the first mould element 52, the second mould element 54 and two lateral mould elements 60. In this representation, the first mould element 52 has a comb structure, which defines the side faces 42, the rear portion 40 of the guiding elements 22 and the rear portion 36 of the latching elements 20. The second mould element 54 has a correspondingly inverse comb structure, which engages in the comb structure of the mould element 52, the mould element defining the clearances 24, the front portion 38 and the sliding portion 32.

This form of the mould elements 52, 54 allows the latching elements 20 to be defined and demoulded between the guiding elements 22. Furthermore, the front portions 38 of the guiding elements 22 can be defined and demoulded through the clearances 24. This permits demoulding to be performed by drawing the mould elements 52, 54 axially apart.

It goes without saying that the receiving portion 12 may generally also have a round or polygonal base area. Furthermore, any number of guiding elements 22 and latching elements 20 may be provided in the receiving portion.

Furthermore, it is also conceivable for the clearances 24 to be formed such that they are open on one side, in other words for the webs 32 not to be connected to one another in the region of the latching portions 34.

## Claims

1. Connecting element (10) for fitting onto an elongated fastening element (44), in particular a pin, bolt or the like, comprising
a receiving portion (12) for receiving the fastening element (44) in an axial direction of insertion,
at least one guiding portion (26), which is provided on at least one respective guiding element (22) formed on the receiving portion (12) in order to support the fastening element (44) laterally,
a latching element (20), which is formed on the receiving portion (12), the latching element (20) having a functional portion (32, 34) on which the fastening element (44) slides in the direction of insertion and which inhibits movement of the fastening element (44) in a direction opposite to the direction of insertion,
**characterized in that**
the latching element (20) has at least one clearance (24), wherein the at least one guiding element (22) is formed in line with the at least one clearance (24) in the axial direction, in such a way that a mould element (54) can be made to pass through the clearance (24).

2. Connecting element according to Claim 1, **characterized in that** the latching element (20) is formed adjacent to the guiding portion (26) in the axial direction.

3. Connecting element according to one of Claims 1 or 2, **characterized in that** the latching element (20) protrudes radially with respect to the guiding portion (26).

4. Connecting element according to one of Claims 1 to 3, **characterized in that** the latching element (20) is formed in a radially pivotable manner.

5. Connecting element according to one of Claims 1 to 4, **characterized in that** the functional portion (32, 34) forms a non-positive connection with the fastening element (44) in the direction opposite to the direction of insertion.

6. Connecting element according to one of Claims 1 to 5, **characterized in that** the functional portion (32, 34) forms a positive connection with the fastening element (44) in the direction opposite to the direction of insertion.

7. Connecting element according to one of Claims 1 to 6, **characterized in that** the functional portion (32, 34) has a sliding portion (32) and a latching portion (34).

8. Connecting element according to Claim 7, **characterized in that** the sliding portion (32) is formed orthogonally in relation to the latching portion (34).

9. Connecting element according to one of Claims 1 to 8, **characterized in that** the guiding element (22) and the latching element (20) are formed in one piece.

10. Connecting element according to one of Claims 1 to 9, **characterized in that** a plurality of guiding elements (22) and a plurality of latching elements (20) are formed on the receiving portion (12).

11. Mould for producing a connecting element according to one of Claims 1 to 10 by injection moulding, comprising
a first mould element (52) and a second mould element (54), which together define an injection moulding cavity,
the first mould element (52) and the second mould element (54) being formed in such a way that, during demoulding, the first mould element (52) can be released from the connecting element (10) in the direction of insertion and the second mould element (54) can be released from the connecting element (10) counter to the direction of insertion.

12. Mould according to Claim 11, the first mould element (52) defining a side face (42) and the guiding portion (26) of the guiding element (22) and the second mould element (54) defining the clearance (24) and an end face (38) of the guiding element (22) facing the latching element (20).

13. Mould according to Claim 11 or 12, the first mould element (52) defining a portion (36) of the latching element (20) facing the guiding element (22).

14. Method of demoulding a connecting element, comprising
a receiving portion (12) for receiving a fastening element (44) in an axial direction of insertion,
a guiding portion (26), which is formed on a guiding element (22) of the receiving portion (12) in order to support the fastening element (44) laterally, and
a latching element (20), which is formed on the receiving portion (12), wherein
two mould elements (52, 54) being brought together in order to define an injection moulding cavity;
a first of the mould elements (52) defining a side face (42) and the guiding portion (26) of the guiding element (22);
a second of the mould elements (54) defining a sliding portion (32) of the latching element (20) and an end face (38) of the guiding element (22) facing the latching element (20);
the injection moulding cavity being filled;
and the mould elements (52, 54) being drawn back in opposite directions, whereby a continuous clearance (24) remains in the latching element (20) on account of the drawing back of the first mould element (52).

15. Method according to Claim 14, the first mould element (52) defining a portion (36) of the latching element (20) facing the guiding element (22).

## Patentansprüche

1. Verbindungselement (10) zum Aufstecken auf ein langgestrecktes Befestigungselement (44), insbesondere einen Zapfen, Bolzen oder dergleichen, mit
einem Aufnahmeabschnitt (12) zum Aufnehmen des Befestigungselementes (44) in einer axialen Einschubrichtung,
wenigstens einem Führungsabschnitt (26), der an wenigstens einem jeweiligen Führungselement (22) vorgesehen ist, das an dem Aufnahmeabschnitt (12) gebildet ist, um das Befestigungselement (44) seitlich abzustützen,
einem Rastelement (20), das an dem Aufnahmeabschnitt (12) gebildet ist, wobei das Rastelement (20) einen Funktionsabschnitt (32, 34) aufweist, an dem das Befestigungselement (44) in Einschubrichtung gleitet und der eine Bewegung des Befestigungselementes (44) in einer der Einschubrichtung entgegengesetzten Richtung hemmt,
**dadurch gekennzeichnet, dass**
das Rastelement (20) wenigstens eine Aussparung (24) aufweist, wobei das wenigstens eine Führungselement (22) in der axialen Richtung mit der wenigstens einen Aussparung (24) fluchtet, so, dass ein Formelement (54) durch die Ausnehmung führbar ist.

2. Verbindungselement nach Anspruch 1, **dadurch gekennzeichnet, dass** das Rastelement (20) dem Führungsabschnitt (26) in axialer Richtung benachbart ausgebildet ist.

3. Verbindungselement nach einem der Ansprüche 1 oder 2, **dadurch gekennzeichnet, dass** das Rastelement (20) gegenüber dem Führungsabschnitt (26) radial vorsteht.

4. Verbindungselement nach einem der Ansprüche 1 bis 3, **dadurch gekennzeichnet, dass** das Rastelement (20) radial schwenkbar ausgebildet ist.

5. Verbindungselement nach einem der Ansprüche 1 bis 4, **dadurch gekennzeichnet, dass** der Funktionsabschnitt (32, 34) mit dem Befestigungselement (44) in der der Einschubrichtung entgegengesetzten Richtung eine kraftschlüssige Verbindung bildet.

6. Verbindungselement nach einem der Ansprüche 1 bis 5, **dadurch gekennzeichnet, dass** der Funktionsabschnitt (32, 34) mit dem Befestigungselement (44) in der der Einschubrichtung entgegengesetzten Richtung eine formschlüssige Verbindung bildet.

7. Verbindungselement nach einem der Ansprüche 1 bis 6, **dadurch gekennzeichnet, dass** der Funktionsabschnitt (32, 34) einen Gleitabschnitt (32) und einen Rastabschnitt (34) aufweist.

8. Verbindungselement nach Anspruch 7, **dadurch gekennzeichnet, dass** der Gleitabschnitt (32) orthogonal zu dem Rastabschnitt (34) ausgebildet ist.

9. Verbindungselement nach einem der Ansprüche 1 bis 8, **dadurch gekennzeichnet, dass** das Führungselement (22) und das Rastelement (20) einstückig ausgebildet sind.

10. Verbindungselement nach einem der Ansprüche 1 bis 9, **dadurch gekennzeichnet, dass** an dem Aufnahmeabschnitt (12) eine Mehrzahl von Führungselementen (22) und eine Mehrzahl von Rastelementen (20) ausgebildet sind.

11. Formwerkzeug zur Spritzgussfertigung eines Verbindungselementes nach einem der Ansprüche 1 bis 10 mit
einem ersten Formelement (52) und einem zweiten Formelement (54), die zusammen einen Spritzgussraum definieren, wobei
das erste Formelement (52) und das zweite Formelement (54) derart ausgebildet sind, dass bei einer Entformung das erste Formelement (52) in Einschubrichtung und das zweite Formelement (54) entgegen der Einschubrichtung von dem Verbindungselement (10) lösbar sind.

12. Formwerkzeug nach Anspruch 11, wobei das erste Formelement (52) eine Seitenfläche (42) und den Führungsabschnitt (26) des Führungselementes (22) definiert und das zweite Formelement (54) die Aussparung (24) und eine dem Rastelement (20) zugewandte Endfläche (38) des Führungselementes (22) definiert.

13. Formwerkzeug nach Anspruch 11 oder 12, wobei das erste Formelement (52) einen dem Führungselement (22) zugewandten Abschnitt (36) des Rastelements (20) definiert.

14. Verfahren zum Entformen eines Verbindungselementes, das aufweist:
einen Aufnahmeabschnitt (12) zum Aufnehmen eines Befestigungselementes (44) in einer axialen Einschubrichtung,
einen Führungsabschnitt (26), der an einem Führungselement (22) des Aufnahmeabschnitts (12) gebildet ist, um das Befestigungselement (44) seitlich abzustützen,
ein Rastelement (20), das an dem Aufnahmeabschnitt (12) gebildet ist, wobei zwei Formelemente (52, 54) zusammengeführt werden, um einen Spritzgussraum zu definieren;
ein erstes der Formelemente (52) eine Seitenfläche (42) und den Führungsabschnitt (26) des Führungselementes (22) definiert;
ein zweites der Formelemente (54) einen Gleitabschnitt (32) des Rastelementes (20) und eine dem Rastelement (20) zugewandte Endfläche (38) des Führungselementes (22) definiert;
der Spritzgussraum ausgespritzt wird; und
die Formelemente (52, 54) in entgegengesetzten Richtungen zurückgezogen werden, wodurch aufgrund des Zurückziehens des ersten Formelementes (52) eine durchgehende Aussparung (24) in dem Rastelement (20) verbleibt.

15. Verfahren nach Anspruch 14, wobei das erste Formelement (52) einen dem Führungselement (22) zugewandten Abschnitt (36) des Rastelementes (20) definiert.

## Revendications

1. Elément de connexion (10) destiné à être ajusté sur un élément de fixation allongé (44), en particulier une broche, un boulon ou similaire, comprenant
une portion de réception (12) pour recevoir l'élément de fixation (44) dans une direction d'insertion axiale,
au moins une portion de guidage (26) prévue sur au moins un élément de guidage respectif (22) formé sur la portion de réception (12) afin de supporter l'élément de fixation (44) latéralement,
un élément de verrouillage (20) qui est formé sur la portion de réception (12), l'élément de verrouillage (20) ayant une portion fonctionnelle (32, 34) sur laquelle l'élément de fixation (44) glisse dans la direction d'insertion et qui empêche le mouvement de l'élément de fixation (44) dans une direction opposée à la direction d'insertion,
**caractérisé en ce que**
l'élément de verrouillage (20) a au moins un dégagement (24), l'au moins un élément de guidage (22) étant formé en alignement avec l'au moins un dégagement (24) dans la direction axiale de telle sorte qu'un élément de moule (54) puisse être passé à travers le dégagement (24).

2. Elément de connexion selon la revendication 1, **caractérisé en ce que** l'élément de verrouillage (20) est formé en position adjacente à la portion de guidage (26) dans la direction axiale.

3. Elément de connexion selon l'une quelconque des revendications 1 ou 2, **caractérisé en ce que** l'élément de verrouillage (20) fait saillie radialement par rapport à la portion de guidage (26).

4. Elément de connexion selon l'une quelconque des revendications 1 à 3, **caractérisé en ce que** l'élément de verrouillage (20) est formé de manière pivotante radialement

5. Elément de connexion selon l'une quelconque des revendications 1 à 4, **caractérisé en ce que** la portion fonctionnelle (32, 34) forme une connexion non positive avec l'élément de fixation (44) dans la direction opposée à la direction d'insertion.

6. Elément de connexion selon l'une quelconque des revendications 1 à 5, **caractérisé en ce que** la portion fonctionnelle (32, 34) forme une connexion positive avec l'élément de fixation (44) dans la direction opposée à la direction d'insertion.

7. Elément de connexion selon l'une quelconque des revendications 1 à 6, **caractérisé en ce que** la portion fonctionnelle (32, 34) a une portion de coulissement (32) et une portion de verrouillage (34).

8. Elément de connexion selon la revendication 7, **caractérisé en ce que** la portion de coulissement (32) est formée perpendiculairement par rapport à la portion de verrouillage (34).

9. Elément de connexion selon l'une quelconque des revendications 1 à 8, **caractérisé en ce que** l'élément de guidage (22) et l'élément de verrouillage (20) sont formés d'une seule pièce.

10. Elément de connexion selon l'une quelconque des revendications 1 à 9, **caractérisé en ce qu'**une pluralité d'éléments de guidage (22) et une pluralité d'éléments de verrouillage (20) sont formées sur la portion de réception (12).

11. Moule pour produire un élément de connexion selon l'une quelconque des revendications 1 à 10 par moulage par injection, comprenant
un premier élément de moule (52) et un deuxième élément de moule (54), qui définissent ensemble une cavité de moule d'injection,
le premier élément de moule (52) et le deuxième élément de moule (54) étant formés de telle sorte que lors du démoulage, le premier élément de moule (52) puisse être libéré de l'élément de connexion (10) dans la direction d'insertion et le deuxième élément de moule (54) puisse être libéré de l'élément de connexion (10) dans le sens inverse à la direction d'insertion.

12. Moule selon la revendication 11, le premier élément de moule (52) définissant une face latérale (42) et la portion de guidage (26) de l'élément de guidage (22) et le deuxième élément de moule (54) définissant le dégagement (24) et une face d'extrémité (38) de l'élément de guidage (22) faisant face à l'élément de verrouillage (20).

13. Moule selon l'une quelconque des revendications 11 ou 12, le premier élément de moule (52) définissant une portion (36) de l'élément de verrouillage (20) faisant face à l'élément de guidage (22).

14. Procédé de démoulage d'un élément de connexion, comprenant
une portion de réception (12) pour recevoir un élément de fixation (44) dans une direction d'insertion axiale,
une portion de guidage (26) qui est formée sur un élément de guidage (22) de la portion de réception (12) afin de supporter l'élément de fixation (44) latéralement, et
un élément de verrouillage (20) qui est formé sur la portion de réception (12), deux éléments de moule (52, 54) étant amenés ensemble afin de définir une cavité de moule d'injection ;
un premier des éléments de moule (52) définissant une face latérale (42) et la portion de guidage (26) de l'élément de guidage (22) ;
un deuxième des éléments de moule (54) définissant une portion de coulissement (32) de l'élément de verrouillage (20) et une face d'extrémité (38) de l'élément de guidage (22) faisant face à l'élément de verrouillage (20) ;
la cavité de moule d'injection étant remplie ;
et les éléments de moule (52, 54) étant écartés dans des directions opposées, un dégagement continu (24) restant dans l'élément de verrouillage (20) en raison de l'écartement du premier élément de moule (52).

15. Procédé selon la revendication 14, le premier élément de moule (52) définissant une portion (36) de l'élément de verrouillage (20) faisant face à l'élément de guidage (22).
